# EUROPÄISCHE PATENTSCHRIFT

(11) **EP 1 897 359 B1**
(45) Veröffentlichungstag und Bekanntmachung des Hinweises auf die Patenterteilung: **12.09.2012**
(21) Anmeldenummer: 06761785.2
(22) Anmeldetag: 06.07.2006
(51) Int. Cl.: H04M 9/08

(54) **SCHALTUNGSANORDNUNG UND VERFAHREN ZUR ERZEUGUNG EINES HÖRTONS SOWIE KOMMUNIKATIONSENDGERÄT**
CIRCUIT ARRANGEMENT, METHOD FOR GENERATING AN AUDIBLE TONE, AND COMMUNICATION TERMINAL
AGENCEMENT DE COMMUTATION ET PROCÉDÉ POUR LA PRODUCTION D'UN SON AUDIBLE, AINSI QU'APPAREIL DE COMMUNICATION TERMINAL

(43) Veröffentlichungstag der Anmeldung: 12.03.2008
(73) Patentinhaber: Cinterion Wireless Modules GmbH, 81669 München (DE)
(72) Erfinder: NEUHAUS, Hans-Jürgen, 12161 Berling (DE)
(74) Vertreter: Eisenführ, Speiser & Partner
(86) Internationale Anmeldenummer: PCT/DE2006/001187
(87) Internationale Veröffentlichungsnummer: WO 2008/003271

(56) Entgegenhaltungen:
- EP-A2- 0 472 289
- US-A1- 5 923 748

## Beschreibung

Die Erfindung betrifft eine Schaltungsanordnung zur Erzeugung eines Hörtons in einem Lautsprecher eines Kommunikationsendgerätes.

In Kommunikationsendgeräten wie beispielsweise Mobilfunk- oder Festnetztelefonen werden häufig einfache, in der Regel im Wesentlichen sinusförmige Hörtöne zur Signalisierung an den Benutzer verwendet. Hierdurch können beispielsweise Betriebs- zustände des Kommunikationsendgerätes angezeigt werden. Allgemein bekannt sind zum Beispiel Hörtöne in Form eines Wähltons, eines Freitons, eines Besetzttons, eines Anklopftons, eines Quittungstons oder eines Warntons. Beispielsweise beschreibt US 5,923,748 ein ähnliches Telefongerät.

EP 0 472 289 A2 beschreibt eine Telefonstation mit einer Anordnung zur Erzeugung eines Signals in einem Lautsprecher. Die Telefonstation hat einen Mikrofoneingang, einen Lautsprecherausgang sowie einen dem Lautsprecherausgang vorgeschalteten Leistungsverstärker. Die Telefonstation hat auch einen kommunikationsnetzseitigen Anschluss in Form einer Telefonleitung. Ein Schalter zwischen dem Leistungsverstärker und einem Alarmtongenerator wird über einen Controller eines Lautsprecherschaltkreises gesteuert. Dieser hat einen Eingang von einer zum Lautsprecherausgang führenden Leitung und einen Eingang von einer vom Mikrofoneingang kommenden Leitung. Kommunikationsendgeräte dieser Art sind noch verbesserbar.

Der vorliegenden Erfindung liegt die Aufgabe zugrunde, eine einfache Anordnung zur Erzeugung eines Hörtons in einem Kommunikationsendgerät unter weitgehender Verwendung von in Kommunikationsendgeräten üblicherweise vorhandenen Komponenten anzugeben.

Diese Aufgabe wird erfindungsgemäß gelöst durch eine Schaltungsanordnung zur Erzeugung eines Hörtons in einem Lautsprecher eines Kommunikationsendgerätes mit einer elektronischen Schaltungseinrichtung, die einen Mikrofoneingang, einen Lautsprecherausgang mit einem vorgeschalteten Leistungsverstärker, einen kommunikationsnetzseitigen Anschluss und einen steuerbaren Rückhörpfad zwischen dem Mikrofoneingang und dem Lautsprecherausgang aufweist. Darüber hinaus verfügt die erfindungsgemäße Schaltungsanordnung über einen Generator zum

Beaufschlagen des Mikrofoneingangs mit einer Speisespannung oder mit einem Wechselspannungssignal im Hörbereich.

Die erfindungsgemäße Schaltungsanordnung ist vorteilhaft, da Kommunikationsendgeräte häufig bereits eine elektronische Schaltungseinrichtung der beschriebenen Art aufweisen. Dabei ist zu beachten, dass es sich bei der elektronischen Schaltungseinrichtung sowohl um eine Schaltungseinrichtung in integrierter Form als um eine aus mehreren einzelnen Bestandteilen zusammengesetzte Schaltungseinrichtung handeln kann.

Über den Mikrofoneingang der elektronischen Schaltungseinrichtung kann ein über ein Mikrofon aufgenommenes Signal in einen Sendeweg der elektronischen Schaltungseinrichtung des Kommunikationsendgerätes eingespeist werden. Hierdurch wird es ermöglicht, dass das über das Mikrofon aufgenommene Signal mittels des kommunikationsnetzseitigen Anschlusses über ein Kommunikationsnetz beispielsweise an ein weiteres Kommunikationsendgerät ausgegeben werden kann. Bei dem Kommunikationsnetz kann es sich dabei um ein Fest- oder Mobilfunknetz gemäß einem beliebigen Kommunikationsstandard handeln.

Darüber hinaus weist die elektronische Schaltungseinrichtung vorzugsweise einen Empfangspfad auf, der es ermöglicht, über den kommunikationsnetzseitigen Anschluss Signale über das Kommunikationsnetz zu empfangen und über den Lautsprecherausgang des Kommunikationsendgerätes auf einen Lautsprecher auszugeben. Zu diesem Zwecke ist dem Lautsprecherausgang ein Leistungsverstärker vorgeschaltet. Es sei darauf hingewiesen, dass im Rahmen der vorliegenden Erfindung der Begriff Lautsprecher generell für beliebige Arten von elektroakustischen Wandlern verwendet wird. Dies bedeutet, dass es sich hierbei beispielsweise auch um einen Telefonhörer bzw. eine Hörkapsel handeln kann. Der Lautsprecherausgang der elektronischen Schaltungseinrichtung kann dabei allgemein derart ausgebildet sein, dass er mit dem Lautsprecher drahtlos oder drahtgebunden verbunden oder verbindbar ist.

Die elektronische Schaltungseinrichtung verfügt des Weiteren über einen steuerbaren Rückhörpfad zwischen dem Mikrofoneingang und dem Lautsprecherausgang. Mittels dieses Rückhörpfades können Signale steuerbar von dem Mikrofoneingang in den Lautsprecherausgang eingekoppelt werden, d.h. ob und gegebenenfalls in welcher Stärke eine Einkopplung erfolgt ist nicht fest vorgegeben, sondern einstellbar.

Der Generator dient einerseits dem Speisen des Mikrofons mit einer Speisespannung. Darüber hinaus wird der Generator im Rahmen der erfindungsgemäßen Schaltungsanordnung zum Beaufschlagen des Mikrofoneingangs der elektronischen Schaltungseinrichtung mit einem Wechselspannungssignal im Hörbereich verwendet. Dieses Wechselspannungssignal im Hörbereich kann mittels der erfindungsgemäßen Schaltungsanordnung steuerbar in den Lautsprecherausgang eingekoppelt werden und damit beispielsweise in dem Lautsprecher des Kommunikationsendgerätes einen Hörton erzeugen.

Das Einspeisen des Wechselspannungssignals im Hörbereich über den Mikrofoneingang und den steuerbaren Rückhörpfad auf den Lautsprecherausgang der elektronischen Schaltungseinrichtung bietet insbesondere den Vorteil, dass ein zusätzlicher Kleinleistungsverstärker vermieden wird, der anderenfalls zur Ansteuerung des üblicherweise niederohmig ausgebildeten Lautsprecherausgangs der elektronischen Schaltungseinrichtung bzw. des Kommunikationsendgerätes erforderlich wäre. Die erfindungsgemäße Schaltungsanordnung nutzt somit in vorteilhafter Weise solche Komponenten, die üblicherweise in Kommunikationsendgeräten bereits vorhanden sind, um auf einfache Art und Weise einen Hörton in einem Lautsprecher eines Kommunikationsendgerätes zu erzeugen.

In einer bevorzugten Weiterbildung ist die elektronische Schaltungseinrichtung zum Ausgeben des Wechselspannungssignals im Hörbereich über dem kommunikationsnetzseitigen Anschluss ausgebildet. Dies ist vorteilhaft, da das Wechselspannungssignal im Hörbereich somit nicht nur über den Lautsprecherausgang der elektronischen Schaltungseinrichtung an den Nutzer des Kommunikationsendgerätes ausgegeben werden kann, sondern alternativ oder zusätzlich hierzu das erzeugte Wechselspannungssignal im Hörbereich über den kommunikationsnetzseitigen Anschluss an das Kommunikationsnetz und somit beispielsweise an ein entferntes, über das Kommunikationsnetz mit dem Kommunikationsendgerät verbundenes Kommunikationsendgerät ausgegeben werden kann.

Vorzugsweise ist die erfindungsgemäße Schaltungsanordnung derart ausgestaltet, dass sie eine Steuerungseinrichtung zum Steuern des Generators sowie der elektronischen Schaltungseinrichtung aufweist. Hierdurch wird es vorteilhafterweise ermöglicht, dass die Funktion des Generators gesteuert werden kann. Dabei kann die Steuerungseinrichtung festlegen, ob wahlweise die Speisespannung des Mikrofons oder das Wechselspannungssignal im Hörbereich zum Beaufschlagen des Mikrofoneingangs der elektronischen Schaltungseinrichtung erzeugt werden soll. Darüber hinaus kann mittels der Steuerungseinrichtung vorteilhafterweise eine Steuerung der Funktionalität der elektronischen Schaltungseinrichtung erfolgen.

In einer weiteren bevorzugten Ausführungsform der erfindungsgemäßen Schaltungsanordnung sind die Steuerungseinrichtung und die elektronische Schaltungseinrichtung zur Aktivierung des Rückhörpfades durch die Steuerungseinrichtung ausgebildet. Diese Ausführungsform bietet den Vorteil, dass der Rückhörpfad zwischen dem Mikrofoneingang und dem Lautsprecherausgang durch die elektronische Schaltungseinrichtung gesteuert werden kann. Dies bedeutet, dass von Seiten der Steuerungseinrichtung situationsabhängig eingestellt beziehungsweise festgelegt werden kann, ob und gegebenenfalls in welchem Umfang eine Ausgabe des erzeugten Wechselspannungssignals im Hörbereich über den steuerbaren Rückhörpfad auf den Lautsprecherausgang erfolgt.

Vorzugsweise kann die erfindungsgemäße Schaltungsanordnung auch derart weitergebildet sein, dass die elektronische Schaltungseinrichtung zwischen dem Mikrofoneingang und dem kommunikationsnetzseitigen Anschluss einen Sendeverstärker aufweist, der zum Einstellen einer hohen Dämpfung bei Aktivierung des Rückhörpfades für das Wechselspannungssignal im Hörbereich ausgebildet ist. Hierdurch wird es vorteilhafterweise ermöglicht, dass bei Aktivierung des Rückhörpfades für das Wechselspannungssignal im Hörbereich ein Ausgeben des Wechselspannungssignals im Hörbereich über den kommunikationsnetzseitigen Anschluss beispielsweise an ein weiteres, entferntes Kommunikationsendgerät vermieden wird.

In einer weiteren bevorzugten Ausführungsform der erfindungsgemäßen Schaltungsanordnung weist die elektronische Schaltungseinrichtung zwischen dem kommunikationsnetzseitigen Anschluss und dem Lautsprecherausgang einen Empfangsverstärker auf, der zum Einstellen einer hohen Dämpfung bei Aktivierung des Rückhörpfades für das Wechselspannungssignal im Hörbereich ausgebildet ist. Dies bietet den Vorteil, dass beim Ausgeben des Wechselspannungssignals im Hörbereich über den Lautsprecherausgang Signale, die von der elektronischen Schaltungseinrichtung beziehungsweise dem Kommunikationsendgerät über den kommunikationsnetzseitigen Anschluss empfangen werden, ausgeblendet werden können. Hierdurch wird eine Überlagerung des Hörtons beispielsweise mit über den kommunikationsnetzseitigen Anschluss empfangenen Sprachsignalen vermieden.

Die erfindungsgemäße Schaltungsanordnung kann vorzugsweise auch derart ausgeprägt sein, dass die Steuerungseinrichtung ein Mikrocontroller ist. Diese Ausführungsform ist bevorzugt, da es sich bei einem Mikrocontroller um eine weit verbreitete, in Kommunikationsendgeräten häufig eingesetzte und somit in einem Kommunikationsendgerät in der Regel bereits vorhandene Art von Steuerungseinrichtung handelt.

In einer bevorzugten Weiterbildung der erfindungsgemäßen Schaltungsanordnung ist zwischen dem Generator und dem Mikrofoneingang ein Tiefpassfilter angeordnet. Dies bietet den Vorteil, dass das von dem Generator erzeugte Wechselspannungssignal im Hörbereich auf einfache Art und Weise bearbeitet werden. Sofern es sich bei dem von dem Generator erzeugten Wechselspannungssignal im Hörbereich beispielsweise um ein Rechtecksignal handelt, so kann dieses Wechselspannungssignal in einem einfachen Fall beispielsweise über einen Tiefpassfilter zweiter Ordnung, d.h. einen aus zwei RC-Gliedern bestehenden Tiefpassfilter, in ein Dreiecksignal gefiltert werden. Die genaue Ausführung des Tiefpassfilters ist dabei abhängig von der Form des erzeugten Wechselspannungssignals sowie den Ansprüchen an die Qualität des erzeugten Hörtons. Erfahrungsgemäß werden von Nutzern von Kommunikationsendgeräten üblicherweise bereits Hörtöne mit einem Klirrfaktor akzeptiert, der demjenigen von Dreiecksignalen entspricht, so dass eine entsprechende Filterung ausreichend ist.

In einer weiteren bevorzugten Ausführungsform der erfindungsgemäßen Schaltungsanordnung ist die elektronische Schaltungseinrichtung ein Audio-Codec-Baustein. Bei einem Audio-Codec-Baustein handelt es sich um eine weit verbreitete Art von elektronischen Schaltungseinrichtungen, die in modernen Kommunikationsendgeräten häufig zum Einsatz kommt und die im Rahmen einer Unterstützung der Übertragung und Verarbeitung von Audiosignalen erforderlichen Funktionalitäten bereitstellt. Als Beispiel für einen solchen Audio-Codec-Baustein, der einen steuerbaren Rückhörpfad aufweist, sei etwa der Audio-Codec-Baustein TSC 2101 der Firma Texas Instruments genannt.

Die erfindungsgemäße Schaltungsanordnung kann vorteilhafterweise auch derart ausgestaltet sein, dass mit dem Mikrofoneingang ein Mikrofon in Form eines Elektret-Mikrofons verbunden ist. Diese Ausführungsform ist vorteilhaft, da es sich bei Elektret-Mikrofonen um die gängige Art von in Kommunikationsendgeräten verwendeten, mit einer Speisespannung gespeisten Mikrofonen handelt.

Vorzugsweise ist die erfindungsgemäße Schaltungsanordnung derart ausgebildet, dass der Generator zum Erzeugen eines Wechselspannungssignals in Form eines Rechtecksignals ausgebildet ist. Bei einem Rechtecksignal handelt es sich vorteilhafterweise um eine einfache Art eines Wechselspannungssignals, das mit geringem Aufwand erzeugt werden kann.

In einer weiteren bevorzugten Weiterbildung der erfindungsgemäßen Schaltungsanordnung ist der Generator ein Schmitt-Trigger. Dies ist vorteilhaft, da es sich hierbei um eine einfache, kostengünstige und bewährte Operationsverstärkerschaltung zum Erzeugen eines Rechtecksignals handelt. Vorzugsweise kann die erfindungsgemäße Schaltungsanordnung auch so ausgestaltet sein, dass der Generator Bestandteil der Steuerungseinrichtung ist. Diese Ausführungsform bietet den Vorteil, dass sie die Notwendigkeit eines separaten Generators vermeidet und somit Platz und Kosten spart.

Vorzugsweise weist die erfindungsgemäße Schaltungsanordnung Mittel zum Einstellen der Frequenz des Wechselspannungssignals im Hörbereich durch die Steuerungseinrichtung auf. Hierdurch wird es vorteilhafterweise ermöglicht, Wechselspannungssignale im Hörbereich mit unterschiedlichen Frequenzen zu erzeugen und somit Hörtöne unterschiedlicher Frequenz auszugeben. Hierdurch wird beispielsweise die Möglichkeit einer Anzeige unterschiedlicher Betriebszustände des Kommunikationsendgerätes mittels Hörtönen unterschiedlicher Frequenz geschaffen.

In einer weiteren bevorzugten Ausführungsform weist die erfindungsgemäße Schaltungsanordnung Mittel zum Einstellen des Pegels des Wechselspannungssignals im Hörbereich durch die Steuerungseinrichtung auf. Dies ermöglicht es der Steuerungseinrichtung, situationsabhängig den Pegel, d.h. die Lautstärke, des erzeugten Hörtons einzustellen. So können beispielsweise in unterschiedlichen Situationen beziehungsweise zur Anzeige unterschiedlicher Betriebszustände Hörtöne unterschiedlicher Lautstärke erzeugt werden.

Die Erfindung betrifft darüber hinaus ein Kommunikationsendgerät.

Bezüglich des Kommunikationsendgerätes liegt der vorliegenden Erfindung die Aufgabe zugrunde, ein Kommunikationsendgerät anzugeben, dass zur Erzeugung eines Hörtons unter weitgehender Verwendung von in Kommunikationsendgeräten üblicherweise vorhandenen Komponenten ausgebildet ist.

Diese Aufgabe wird erfindungsgemäß gelöst durch ein Kommunikationsendgerät mit einer Schaltungsanordnung zur Erzeugung eines Hörtons in einem Lautsprecher des Kommunikationsendgerätes mit einer elektronischen Schaltungseinrichtung, die einen Mikrofoneingang, einen Lautsprecherausgang mit einem vorgeschalteten Leistungsverstärker, einen kommunikationsnetzseitigen Anschluss und einen steuerbaren Rückhörpfad zwischen dem Mikrofoneingang und dem Lautsprecherausgang aufweist. Darüber hinaus umfasst die Schaltungsanordnung des erfindungsgemäßen Kommunikationsendgerätes einen Generator zum Beaufschlagen des Mikrofoneingangs mit einer Speisespannung oder mit einem Wechselspannungssignal im Hörbereich.

Das erfindungsgemäße Kommunikationsendgerät ist vorteilhaft, da es zur Erzeugung einen Hörtons mittels einer Schaltungsanordnung ausgebildet ist, deren Komponenten in der Regel zumindest größtenteils bereits in einem Kommunikationsendgerät vorhanden sind. Dabei wird der steuerbare Rückhörpfad zwischen dem Mikrofoneingang und dem Lautsprecherausgang der elektronischen Schaltungseinrichtung der Schaltungsanordnung des Kommunikationsendgerätes vorteilhafterweise dazu verwendet, um ein über den Mikrofoneingang empfangenes Wechselspannungssignal im Hörbereich auf den Lautsprecherausgang der elektronischen Schaltungseinrichtung auszugeben.

Bevorzugte Weiterbildungen des erfindungsgemäßen Kommunikationsendgerätes sind dadurch gekennzeichnet, dass sie eine Schaltungsanordnung gemäß einer der zuvor beschriebenen bevorzugten Weiterbildungen der erfindungsgemäßen Schaltungsanordnung aufweisen.

Die Erfindung betrifft des Weiteren ein Verfahren zur Erzeugung eines Hörtons in einem Lautsprecher eines Kommunikationsendgerätes.

Hinsichtlich des Verfahrens liegt der vorliegenden Erfindung die Aufgabe zugrunde, ein einfaches Verfahren zur Erzeugung eines Hörtons in einem Kommunikationsendgerät unter weitgehender Verwendung von in Kommunikationsendgeräten üblicherweise vorhandenen Komponenten anzugeben.

Diese Aufgabe wird erfindungsgemäß gelöst durch ein Verfahren zur Erzeugung eines Hörtons in einem Lautsprecher eines Kommunikationsendgerätes mit den folgenden Schritten: Erzeugen eines Wechselspannungssignals im Hörbereich durch einen Generator, Beaufschlagen eines Mikrofoneingangs einer elektronischen Schaltungseinrichtung mit dem erzeugten Wechselspannungssignal im Hörbereich und Ausgeben des Wechselspannungssignals im Hörbereich über einen kommunikationsnetzseitigen Anschluss der elektronischen Schaltungseinrichtung und/oder Ausgeben des Wechselspannungssignals im Hörbereich über einen Lautsprecherausgang mit einem vorgeschalteten Leistungsverstärker der elektronischen Schaltungseinrichtung mittels eines den Mikrofoneingang und den Lautsprecherausgang verbindenden steuerbaren Rückhörpfades der elektronischen Schaltungseinrichtung.

Das erfindungsgemäße Verfahren ist vorteilhaft, da das durch den Generator erzeugte Wechselspannungssignal im Hörbereich durch das Beaufschlagen des Mikrofoneingangs der elektronischen Schaltungseinrichtung in die elektronische Schaltungseinrichtung eingespeist wird. Daraufhin besteht nun die Möglichkeit, das Wechselspannungssignal im Hörbereich wahlweise über den kommunikationsnetzseitigen Anschluss und/oder mittels des den Mikrofoneingang und den Lautsprecherausgang verbindenden steuerbaren Rückhörpfades über den Lautsprecherausgang auszugeben. Dabei weist der Lautsprecherausgang einen vorgeschalteten Leistungsverstärker zum Ausgeben von Signalen an den üblicherweise niederohmigen Lautsprecherausgang auf. Das erfindungsgemäße Verfahren vermeidet vorteilhafterweise insbesondere die Notwendigkeit eines zusätzlichen Kleinleistungsverstärkers, der bei alternativen Verfahren zur Erzeugung eines Hörtons in einem Lautsprecher eines Kommunikationsendgerätes in der Regel erforderlich wäre.

In einer bevorzugten Ausführungsform des erfindungsgemäßen Verfahrens werden der Generator und die elektronische Schaltungsanordnung von einer Steuerungseinrichtung gesteuert. Hierdurch wird es vorteilhafterweise auf flexible Art und Weise ermöglicht, dass der Generator situationsabhängig entweder eine Speisespannung für ein mit dem Mikrofoneingang der elektronischen Schaltungseinrichtung verbundenes Mikrofon oder das Wechselspannungssignal im Hörbereich erzeugen kann. Zu diesem Zwecke kann die Steuerungseinrichtung beispielsweise über eine programmierbare Ablauflogik verfügen. Darüber hinaus wird es durch die Steuerungseinrichtung ermöglicht, die Funktion der elektronischen Schaltungseinrichtung, wie beispielsweise insbesondere den steuerbaren Rückhörpfad, zu steuern.

Das erfindungsgemäße Verfahren kann vorzugsweise weiterhin auch so ablaufen, dass ein zwischen dem Mikrofoneingang und dem kommunikationsnetzseitigen Anschluss der elektronischen Schaltungseinrichtung angeordneter Sendeverstärker beim Ausgeben des Wechselspannungssignals im Hörbereich über den Lautsprecherausgang mittels des steuerbaren Rückhörpfades auf eine hohe Dämpfung eingestellt wird. Hierdurch wird es vorteilhafterweise vermieden, dass das in den Lautsprecherausgang der elektronischen Schaltungseinrichtung eingekoppelte Wechselspannungssignal im Hörbereich gleichzeitig über den kommunikationsnetzseitigen Anschluss beispielsweise an ein weiteres Kommunikationsendgerät ausgegeben wird, das über das Kommunikationsnetz mittels einer Festnetz- oder Mobilfunkverbindung mit dem Kommunikationsendgerät verbunden ist.

In einer weiteren bevorzugten Weiterbildung läuft das erfindungsgemäße Verfahren derart ab, dass ein zwischen dem kommunikationsnetzseitigen Anschluss und dem Lautsprecherausgang angeordneter Empfangsverstärker beim Ausgeben des Wechselspannungssignals im Hörbereich über den Lautsprecherausgang mittels des steuerbaren Rückhörpfades auf eine hohe Dämpfung eingestellt wird. Hierdurch wird vorteilhafterweise eine Überlagerung des in den Lautsprecherausgang eingekoppelten Wechselspannungssignals im Hörbereich durch ein über den kommunikationsnetzseitigen Anschluss empfangenes Signal vermieden.

In einer besonders bevorzugten Weiterbildung des erfindungsgemäßen Verfahrens wird als Steuerungseinrichtung ein Mikrocontroller verwendet. Dies ist vorteilhaft, da es sich bei einem Mikrocontroller um eine Art von Steuerungseinrichtung handelt, die in einem Kommunikationsendgerät zur Steuerung verschiedener Funktionalitäten üblicherweise bereits vorhanden ist und eine flexibel programmierbare Steuerung erlaubt.

Vorzugsweise läuft das erfindungsgemäße Verfahren so ab, dass als elektronische Schaltungseinrichtung ein Audio-Codec-Baustein verwendet wird. Bei einem solchen Audio-Codec-Baustein, der vorzugsweise die Audio-Funktionalitäten eines Kommunikationsendgerätes abdeckt, kann es sich beispielsweise um den Audio-Codec-Baustein TSC 2101 der Firma Texas Instruments handeln.

In einer bevorzugten Ausführungsform läuft das erfindungsgemäße Verfahren so ab, dass die Frequenz des Wechselspannungssignals im Hörbereich von der Steuerungseinrichtung eingestellt wird. Dies ermöglicht es, Hörtöne unterschiedlicher Frequenzen zu erzeugen.

In einer weiteren besonders bevorzugten Weiterbildung des erfindungsgemäßen Verfahrens wird der Pegel des Wechselspannungssignals im Hörbereich von der Steuerungseinrichtung eingestellt. Dies bietet den Vorteil, dass Hörtöne unterschiedlicher Lautstärke erzeugt werden können.

Zur weiteren Erläuterung der Erfindung zeigt
- Figur 1: in einer schematischen Skizze ein erstes Ausführungsbeispiel der erfindungsgemäßen Schaltungsanordnung,
- Figur 2: in einer schematischen Skizze ein zweites Ausführungsbeispiel der erfindungsgemäßen Schaltungsanordnung und
- Figur 3: in einer schematischen Skizze ein drittes Ausführungsbeispiel der erfindungsgemäßen Schaltungsanordnung.

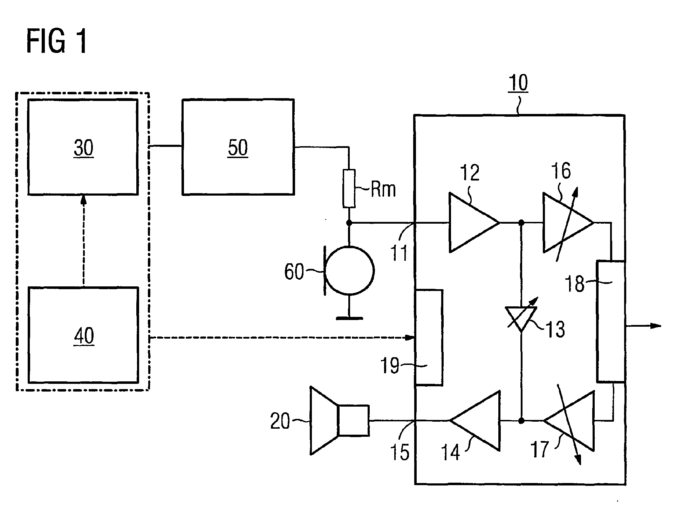

Figur 1 zeigt in einer schematischen Skizze ein erstes Ausführungsbeispiel der erfindungsgemäßen Schaltungsanordnung. Dargestellt ist eine elektronische Schaltungseinrichtung 10 in Form eines Audio-Codec-Bausteins. Wie bereits erläutert kann es sich bei einem solchen Audio-Codec-Baustein beispielsweise um den Audio-Codec TSC 2101 der Firma Texas Instrument handeln. Darüber hinaus wird in Kommunikationsendgeräten jedoch auch eine Vielzahl anderer Audio-Codec-Bausteine unterschiedlicher Hersteller eingesetzt, die sich in der bereitgestellten Funktionalität zumindest teilweise unterscheiden.

Die elektronische Schaltungseinrichtung 10 weist einen Mikrofoneingang 11 auf, der innerhalb der elektronischen Schaltungseinrichtung 10 mit einem Vorverstärker 12 verbunden ist. Über einen Sendeverstärker 16 kann ein über den Mikrofoneingang 11 empfangenes und mittels des Vorverstärkers 12 verstärktes Signal über einen kommunikationsnetzseitigen Anschluss 18 an ein Kommunikationsnetz ausgegeben werden.

Bei dem Kommunikationsnetz kann es sich um Festnetz- oder Mobilfunknetz nach einem beliebigen Kommunikationsstandard, wie beispielsweise dem ISDN (Integrated Services Digital Network)-, dem Ethernet-, dem IP (Internetprotokoll)-, dem GSM (Global System for Mobile Communications)-, dem GPRS (General Packet Radio Service)- oder dem UMTS (Universal Mobile Telecommunications System)-Standard, handeln.

In dem beschriebenen Ausführungsbeispiel sei angenommen, dass die elektronische Schaltungseinrichtung 10 beziehungsweise das Kommunikationsendgerät, in dem die elektronische Schaltungseinrichtung 10 verwendet wird, über den kommunikationsnetzseitigen Anschluss 18 mit einem Mobilfunknetz gemäß dem GSM-Standard verbunden ist. In diesem Fall handelt es sich bei dem kommunikationsnetzseitigen Anschluss 18 um eine Funkschnittstelle, die es dem Kommunikationsendgerät, das die elektronische Schaltungseinrichtung 10 beinhaltet, ermöglicht, über das Mobilfunknetz beispielsweise mit einem entfernten Kommunikationsendgerät eine Sprach- oder Datenverbindung aufzubauen. Darüber hinaus kann die elektronische Schaltungseinrichtung 10 mittels des kommunikationsnetzseitigen Anschlusses 18 in Form der Funkschnittstelle auch Signale von dem Mobilfunknetz, d.h. beispielsweise von dem entfernten Kommunikationsendgerät, empfangen.

Die empfangenen Signale werden in einem Empfangsverstärker 17 verstärkt und anschließend einem Leistungsverstärker 14 zugeführt. Der Ausgang des Leistungsverstärkers 14 ist mit einem Lautsprecherausgang 15 der elektronischen Schaltungseinrichtung 10 verbunden. Über den Lautsprecherausgang 15 ist die elektronische Schaltungseinrichtung 10 mit einem Lautsprecher 20 verbindbar. Dabei gehört der Lautsprecher 20 nicht zwangsläufig selbst zu der Schaltungsanordnung. So ist es beispielsweise möglich, dass über den Lautsprecherausgang 15 ein externer Lautsprecher, etwa in Form einer Hörkapsel, angeschlossen wird.

Neben den bereits erwähnten Komponenten verfügt die elektronische Schaltungseinrichtung 10 über einen steuerbaren Rückhörpfad 13, der den Mikrofoneingang 11 mit dem Lautsprecherausgang 15 verbindet. In dem in Figur 1 dargestellten Ausführungsbeispiel geschieht dies derart, dass das über den Mikrofoneingang 11 empfangene und mittels des Vorverstärkers 12 verstärkte Signal in den Eingang des Leistungsverstärkers 14 und damit in den Lautsprecherausgang 15 eingekoppelt werden kann. Dabei ist zu beachten, dass der steuerbare Rückhörpfad 13 lediglich eine unidirektionale Einkopplung erlaubt, d.h. eine Einkopplung ist ausschließlich vom Mikrofoneingang 11 in Richtung zum Lautsprecherausgang 15 möglich. Der steuerbare Rückhörpfad 13 ist derart steuerbar, dass das Ausgangssignal des Vorverstärkers 12 ganz, zu einem vorgebbaren Anteil oder auch überhaupt nicht in den Lautsprecherausgang 15 eingekoppelt werden kann. Ob und gegebenenfalls in welchem Umfang eine entsprechende Einkopplung stattfindet, kann dabei mittels einer Steuerschnittstelle 19 der elektronischen Schaltungseinrichtung 10 gesteuert werden. So ist es möglich, dass nur bei Anliegen eines entsprechenden Steuersignals an der Steuerschnittstelle 19 der steuerbare Rückhörpfad 13 aktiviert wird. Bei der Steuerschnittstelle 19 handelt es sich vorzugsweise um eine serielle Schnittstelle mit mehreren Leitungen beispielsweise nach dem RS232- oder dem USB (Universal Serial Bus)-Standard.

Neben der elektronischen Schaltungseinrichtung 10 sowie des zur besseren Veranschaulichung ebenfalls dargestellten Lautsprechers 20 zeigt Figur 1 einen Generator 30, eine Steuerungseinrichtung 40, einen Tiefpassfilter 50 sowie ein Mikrofon 60, das einen Arbeitswiderstand Rm aufweist. Zur Versorgung des Mikrofons 60 erzeugt der Generator 30 im normalen . Betrieb eine Speisespannung in Form einer Gleichspannung. Bei dem Mikrofon 60 in dem Ausführungsbeispiel der Figur 1 handelt es sich um ein Elektret-Mikrofon.

Zur einfachen Erzeugung eines Hörtons unter weitgehender Verwendung von in dem Kommunikationsendgerät bereits für andere Zwecke vorhandenen Komponenten ist der Generator 30 derart ausgebildet, dass er neben der Gleichspannung zur Speisung des Mikrofons 60 auch als Rechteckgenerator betrieben werden kann. Bei dem erzeugten Rechtecksignal handelt es sich um ein Wechselspannungssignal im Hörbereich. Dieses kann von dem Generator 30 in Form eines völlig eigenständigen Rechtecksignals bereitgestellt werden, oder das Wechselspannungssignal im Hörbereich kann durch eine entsprechende Modulation der Speisespannung des Mikrofons 60 erzeugt werden. Generell ist die Erzeugung von Wechselspannungssignalen im Hörbereich etwa in Form von Rechtecksignalen allgemein bekannt. So kann sie beispielsweise durch einen Operationsverstärker, ein Logik-Gatter oder einen Mikrocontroller erfolgen.

Mittels des Tiefpassfilters 50 wird das von dem Generator 30 erzeugte Rechecksignal beispielsweise in ein Dreiecksignal umgewandelt. Um das gefilterte Wechselspannungssignal im Hörbereich nun in die Audiowege des Kommunikationsendgerätes beziehungsweise der elektronischen Schaltungseinrichtung 10 einspeisen zu können, wird der Mikrofoneingang 11 der elektronischen Schaltungseinrichtung 10 mit dem Wechselspannungssignal im Hörbereich beaufschlagt. Somit kann das Wechselspannungssignal im Hörbereich nach erfolgter Verstärkung durch den Vorstärker 12 nun einerseits über den Senderverstärker 16 und den kommunikationsnetzseitigen Anschluss 18 an das Mobilfunknetz beziehungsweise mittels des Mobilfunknetzes an das entfernte Kommunikationsendgerät übertragen werden. Darüber hinaus ist es mittels des steuerbaren Rückhörpfades .13 nun aber insbesondere auch möglich, das in den Mikrofoneingang 11 der elektronischen Schaltungseinrichtung 10 eingespeiste Wechselspannungssignal im Hörbereich in den Empfangsweg der elektronischen Schaltungseinrichtung 10 einzukoppeln, d.h. das Wechselspannungssignal im Hörbereich über den Lautsprecherausgang 15 mit vorgeschaltetem Leistungsverstärker 14 beispielsweise auf den Lautsprecher 20 auszugeben. Dabei ist zu beachten, dass der Lautsprecherausgang 15 üblicherweise niederohmig ausgebildet ist.

Die Steuerungseinrichtung 40 dient einerseits der Steuerung des steuerbaren Rückhörpfades 13 über die Steuerschnittstelle 19 der elektronischen Schaltungseinrichtung 10. Darüber hinaus steuert die Steuerungseinrichtung 40 den Generator 30 dahingehend, dass dieser wahlweise entweder die Gleichspannung zum Speisen des Mikrofons 60 oder das Wechselspannungssignal im Hörbereich zum Erzeugen des Hörtons generiert. Dabei kann die Steuerungseinrichtung 40 aus Hardware- und/oder Softwarekomponenten bestehen. So kann die Steuerungseinrichtung 40 beispielsweise in Form eines Mikrocontrollers, der über entsprechenden Programmcode gesteuert wird, ausgebildet sein.

Es sei darauf hingewiesen, dass die Einkopplung über den steuerbaren Rückhörpfad 13 sowohl basierend auf einem analogen als auch basierend auf einem digitalen Signal erfolgen kann. Sofern in Abhängigkeit von der jeweiligen Anwendung eine Einkopplung in digitaler Form gewünscht sein sollte, so könnte beispielsweise in dem Vorverstärker 12 ein Analog/Digital-Wandler und in dem Leistungsverstärker 14 ein Digital/Analog-Wandler integriert werden. Darüber hinaus ist es auch möglich, dass die Einkopplung in analoger Form erfolgt und zur Ausgabe beziehungsweise zum Empfang eines digitalen Signals über den kommunikationsnetzseitigen Anschluss 18 beispielsweise in den Senderverstärker 16 ein Analog/DigitalWandler und in dem Empfangsverstärker 17 ein Digital/AnalogWandler integriert ist. Darüber hinaus können entsprechende Wandler erforderlichenfalls selbstverständlich auch als separate Komponenten realisiert sein.

Wie in Figur 1 angedeutet, können der Generator 30 sowie die Steuerungseinrichtung 40 auch als eine gemeinsame Komponente ausgeführt sein. So kann die Erzeugung der Speisespannung des Mikrofons 60 sowie des Wechselspannungssignals im Hörbereich beispielsweise auch direkt durch die Steuerungseinrichtung 40 übernommen werden.

Über die Steuerungseinrichtung 40 kann im normalen Kommunikationszustand, d.h. zum Beispiel im Telefonbetrieb, die Speisespannung des Mikrofons 60 ein- und ausgeschaltet werden. Zum Erzeugen eines Hörtons wird, wie zuvor bereits erläutert, anstelle der Speise-Gleichspannung beispielsweise ein Rechtecksignal im Hörbereich erzeugt. Diese beiden Funktionen können im Allgemeinen, wie ebenfalls bereits ausgeführt, unmittelbar von der Steuerungseinrichtung 40 übernommen werden. Das erzeugte Rechtecksignal kann mittels des Tiefpassfilters 50 beispielsweise zu einem Dreiecksignal gefiltert werden. Bei höheren Ansprüchen an die Qualität des Hörton-Signals kann von Steuerungseinrichtung 40 beziehungsweise dem Generator 30 auch ein sinusförmiges Signal durch PWM (Pulsweitenmodulations)-Signale nachgebildet werden, das dann ebenfalls den Tiefpassfilter 50 durchläuft.

Das derart erzeugte Wechselspannungssignal im Hörbereich gelangt an den Mikrofoneingang 11 der elektronischen Schaltungseinrichtung 10 und kann so über den kommunikationsnetzseitigen Anschluss 18 beispielsweise an das entfernte Kommunikationsendgerät eines entfernten Teilnehmers als Signalton gesendet werden. Soll das Wechselspannungssignal im Hörbereich an den Benutzer des Kommunikationsendgerätes selbst ausgegeben werden, so wird durch die Steuerungseinrichtung 40 die Steuerschnittstelle 19 der elektronischen Schaltungseinrichtung 10 und damit der Rückhörpfad 13 aktiviert. Hierdurch ist es möglich, dass das Wechselspannungssignal im Hörbereich über den Lautsprecherausgang 15 beispielsweise im Hörer des Kommunikationsendgerätes ausgegeben werden kann. Zu diesem Zwecke kann der Sendeverstärker 16 in Richtung zu dem kommunikationsnetzseitigen Anschluss 18 bei Bedarf auf eine hohe Dämpfung eingestellt werden, so dass der über das Mobilfunknetz angebundene entfernte Teilnehmer das Wechselspannungssignal im Hörbereich beziehungsweise den diesem Signal entsprechenden Hörton nicht hören kann. Ebenso kann der Empfangsverstärker 17 der elektronischen Schaltungseinrichtung 10 vorzugsweise bei Bedarf auf eine hohe Dämpfung eingestellt werden, so dass in diesem Fall Empfangssignale, die von der elektronischen Schaltungseinrichtung 10 beziehungsweise dem Kommunikationsendgerät empfangen werden, ausgeblendet werden. Die entsprechende Steuerung des Sendeverstärkers 16 bzw. des Empfangsverstärkers 17 erfolgt dabei vorzugsweise durch die Steuerungseinrichtung 40 über die Steuerschnittstelle 19.

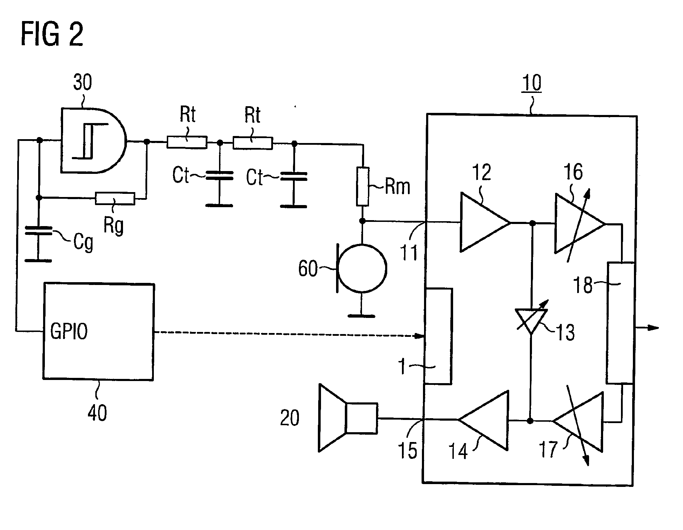

Figur 2 zeigt in einer schematischen Skizze ein zweites Ausführungsbeispiel der erfindungsgemäßen Schaltungsanordnung. Dabei ist der Generator 30 außerhalb der Steuerungseinrichtung 40 realisiert. Konkret handelt es sich beim Generator 30 um einen Schmitt-Trigger. Die Steuerungseinrichtung 40 in Form eines Mikrocontrollers kann dabei mittels eines GPIO (General Purpose Input Output)-Portes GPIO verschiedene Einstellungen bzw. Zustände der dargestellten Schaltungsanordnung realisieren. Wird der GPIO-Port GPIO als Ausgangskanal verwendet und mit einem Low-Pegel belegt, so ist der Ausgang des Generators 30 in Form des invertierenden Schmitt-Triggers auf High-Pegel geschaltet. Dies hat zur Folge, dass das Mikrofon 60, das einen Arbeitswiderstand Rm aufweist, eingeschaltet ist. Wird der GPIO-Port GPIO hingegen als Ausgangskanal mit High-Pegel betrieben, so ist der Ausgang des Generators 30 in Form des invertierenden Schmitt-Triggers auf Low-Pegel geschaltet. Bei dieser Einstellung ist das Mikrofon 60 somit abgeschaltet. Soll nun mittels eines Wechselspannungssignals im Hörbereich ein Hörton erzeugt werden, so wird der GPIO-Port GPIO als Eingangskanal betrieben. In diesem Zustand arbeitet der Generator 30 in Form des Schmitt-Triggers als Rechteckgenerator. Die Frequenz des Rechtecksignals wird dabei durch die Hysterese des Schmitt-Triggers sowie einen parallel zum Generator 30 angeordneten Tiefpass bestehend aus einem Kondensator Cg sowie einen Widerstand Rg bestimmt.

In dem in Figur 2 dargestellten Ausführungsbeispiel wird das Wechselspannungssignal im Hörbereich in Form des erzeugten Rechtecksignals über einen Tiefpassfilter in Form eines zweifachen Tiefpasses bestehend jeweils aus einem Widerstand Rt und einem Kondensator Ct gefiltert. Hierdurch wird das Rechtecksignal in ein Dreiecksignal umgewandelt, das über den Mikrofoneingang 11 und den steuerbaren Rückhörpfad 13 auf den Lautsprecherausgang 15 der elektronischen Schaltungseinrichtung 10 ausgegeben werden kann.

Die drei zuvor beschriebenen Zustände können gegebenenfalls auch direkt von der Steuerungseinrichtung 40 an dem GPIO-Port GPIO bereitgestellt werden. In diesem Fall entfällt die Notwendigkeit eines separaten Generators 30 sowie des Kondensators Cg und des Widerstandes Rg, so dass sich der Zusatzaufwand für die Erzeugung des Hörtons in diesem Fall lediglich auf den Tiefpassfilter in Form des zweifachen Tiefpasses bestehend aus jeweils einem Widerstand Rt und einem Kondensator Ct reduziert.

Die übrigen in Figur 2 dargestellten Bauteile entsprechenden dem bereits im Zusammenhang in Figur 1 beschriebenen Komponenten. Generell sei angemerkt, dass der Tiefpassfilter allgemein beispielsweise als Tiefpass n-ter Ordnung, d.h. aufgebaut aus einer Anzahl n von RC-Gliedern, ausgebildet sein kann, wobei der Wert der Zahl n durch die jeweiligen Anforderungen an die Qualität des Hörtons bestimmt wird.

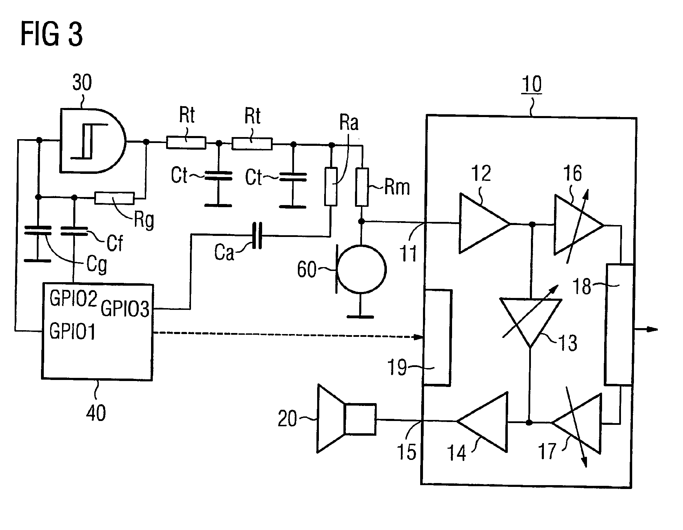

Figur 3 zeigt in einer schematischen Skizze ein drittes Ausführungsbeispiel der erfindungsgemäßen Anordnung. Wie aus einem Vergleich mit Figur 2 ersichtlich ist, handelt es sich bei der in Figur 3 dargestellten Schaltungsanordnung um eine Erweiterung der Schaltungsanordnung gemäß Figur 2. Konkret ist die Schaltungsanordnung der Figur 3 gegenüber derjenigen der Figur 2 um Mittel zum Einstellen der Frequenz und um Mittel zum Einstellen des Pegels des Wechselspannungssignals im Hörbereich durch die Steuerungseinrichtung 40 erweitert. Zu diesem Zwecke weist die Steuerungseinrichtung 40 in Form des Mikrocontrollers 40 nun drei GPIO-Ports GPIO1, GPIO2 und GPIO3 auf. Durch das Schalten des GPIO-Ports GPIO2 von Eingang auf Ausgang mit Low-Pegel wird ein Kondensator Cf parallel zu dem Kondensator Cg geschaltet. Hierdurch wird eine tiefere Frequenz des Wechselspannungssignals im Hörbereich und damit des erzeugten Hörtons eingestellt.

Durch das Schalten des GPIO-Ports GPIO3 von Eingang auf Ausgang mit Low-Pegel wird der Ausgangspegel des Wechselspannungssignals im Hörbereich und damit die Lautstärke des erzeugten Hörtons reduziert. Zu diesem Zweck muss der dargestellte Kondensator Ca für den Fall, dass nur der Pegel reduziert, aber keine Änderung der Signalform hervorgerufen werden soll, wesentlich größer als die Kondensatoren Ct dimensioniert werden.

## Patentansprüche

1. Schaltungsanordnung zur Erzeugung eines Hörtons in einem Lautsprecher (20) eines Kommunikationsendgerätes mit
- einer elektronischen Schaltungseinrichtung (10), die aufweist
- einen Mikrofoneingang (11),
- einen Lautsprecherausgang (15) mit einem vorgeschalteten Leistungsverstärker (14),
- einen kommunikationsnetzseitigen Anschluss (18) und
- einen steuerbaren Rückhörpfad (13) zwischen dem Mikrofoneingang (11) und dem Lautsprecherausgang (15),
- sowie **gekennzeichnet durch** einen Generator (30) zum Beaufschlagen des Mikrofoneingangs (11) mit einer Speisespannung oder mit einem Wechselspannungssignal im Hörbereich.

2. Schaltungsanordnung nach Anspruch 1, **dadurch gekennzeichnet, dass** die elektronische Schaltungseinrichtung (10) zum Ausgeben des Wechselspannungssignals im Hörbereich über den kommunikationsnetzseitigen Anschluss (18) ausgebildet ist.

3. Schaltungsanordnung nach Anspruch 1 oder 2, **dadurch gekennzeichnet, dass** sie eine Steuerungseinrichtung (40) zum Steuern des Generators (30) sowie der elektronischen Schaltungseinrichtung (10) aufweist.

4. Schaltungsanordnung nach Anspruch 3, **dadurch gekennzeichnet, dass** die Steuerungseinrichtung (40) und die elektronische Schaltungseinrichtung (10) zur Aktivierung des Rückhörpfades (13) durch die Steuerungseinrichtung (40) ausgebildet sind.

5. Schaltungsanordnung nach einem der vorangehenden Ansprüche, **dadurch gekennzeichnet, dass** die elektronische Schaltungseinrichtung (10) zwischen dem Mikrofoneingang (11) und dem kommunikationsnetzseitigen Anschluss (18) einen Sendeverstärker (16) aufweist, der zum Einstellen einer hohen Dämpfung bei Aktivierung des Rückhörpfades (13) für das Wechselspannungssignal im Hörbereich ausgebildet ist.

6. Schaltungsanordnung nach einem der Ansprüche 2 bis 5, **dadurch gekennzeichnet, dass** die elektronische Schaltungseinrichtung (10) zwischen dem kommunikationsnetzseitigen Anschluss (18) und dem Lautsprecherausgang (15) einen Empfangsverstärker (17) aufweist, der zum Einstellen einer hohen Dämpfung bei Aktivierung des Rückhörpfades (13) für das Wechselspannungssignal im Hörbereich ausgebildet ist.

7. Schaltungsanordnung nach einem der Ansprüche 2 bis 6, **dadurch gekennzeichnet, dass** die Steuerungseinrichtung (40) ein MikroController ist.

8. Schaltungsanordnung nach einem der vorangehenden Ansprüche, **dadurch gekennzeichnet, dass** zwischen dem Generator (30) und dem Mikrofoneingang (11) ein Tiefpassfilter (50;Rt,Ct) angeordnet ist.

9. Schaltungsanordnung nach einem der vorangehenden Ansprüche, **dadurch gekennzeichnet, dass** die elektronische Schaltungseinrichtung (10) ein Audio-Codec- Baustein ist.

10. Schaltungsanordnung nach einem der vorangehenden Ansprüche, **dadurch gekennzeichnet, dass** mit dem Mikrofoneingang (11) ein Mikrofon (60) in Form eines Elektret-Mikrofons verbunden ist.

11. Schaltungsanordnung nach einem der vorangehenden Ansprüche, **dadurch gekennzeichnet, dass** der Generator (30) zum Erzeugen eines Wechselspannungssignals in Form eines Rechtecksignals ausgebildet ist.

12. Schaltungsanordnung nach Anspruch 11, **dadurch gekennzeichnet, dass** der Generator (30) ein Schmitt-Trigger ist.

13. Schaltungsanordnung nach einem der Ansprüche 3 bis 11, **dadurch gekennzeichnet, dass** der Generator (30) Bestandteil der Steuerungseinrichtung (40) ist.

14. Schaltungsanordnung nach einem der vorangehenden Ansprüche, **dadurch gekennzeichnet, dass** sie Mittel zum Einstellen der Frequenz des Wechselspannungssignals im Hörbereich durch die Steuerungseinrichtung (40) aufweist.

15. Schaltungsanordnung nach einem der vorangehenden Ansprüche, **dadurch gekennzeichnet, dass** sie Mittel zum Einstellen des Pegels des Wechselspannungssignals im Hörbereich durch die Steuerungseinrichtung (40) aufweist.

16. Kommunikationsendgerät **dadurch gekennzeichnet, dass** es eine Schaltungsanordnung nach einem der vorangehenden Ansprüche aufweist.

17. Verfahren zur Erzeugung eines Hörtons in einem Lautsprecher (20) eines Kommunikationsendgerätes mit
- einer elektronischen Schaltungseinrichtung (10), die aufweist
- einem Mikrofoneingang (11)
- einem Lautsprecherausgang (15) mit einem vorgeschalteten Leistungsverstärker (14)
- einem kommunikationsnetzseitigen Anschluss (18) und
- einem steuerbaren Rückhörpfad (13) zwischen dem Mikrofoneingang (11) und dem Lautsprecherausgang (15), **gekennzeichnet durch** die Schritte:
- Erzeugen des Wechselspannungssignals im Hörbereich **durch** einen Generator (30),
- Beaufschlagen eines Mikrofoneingangs (11) der elektronischen Schaltungseinrichtung (10) mit dem erzeugten Wechselspannungssignal im Hörbereich und
- Ausgeben des Wechselspannungssignals im Hörbereich über den kommunikationsnetzseitigen Anschluss (18) der elektronischen Schaltungseinrichtung (10) und/oder
- Ausgeben des Wechselspannungssignals im Hörbereich über den Lautsprecherausgang (15) mit einem vorgeschalteten Leistungsverstärker (14) der elektronischen Schaltungseinrichtung (10) mittels dem den Mikrofoneingang (11) und den Lautsprecherausgang (15) verbindenden steuerbaren Rückhörpfad (13) der elektronischen Schaltungseinrichtung (10).

18. Verfahren nach Anspruch 17, **dadurch gekennzeichnet, dass** der Generator (30) und die elektronische Schaltungseinrichtung (10) von einer Steuerungseinrichtung (40) gesteuert werden.

19. Verfahren nach Anspruch 17 oder 18, **dadurch gekennzeichnet, dass** ein zwischen dem Mikrofoneingang (11) und dem kommunikationsnetzseitigen Anschluss (18) der elektronischen Schaltungseinrichtung (10) angeordneter Sendeverstärker (16) beim Ausgeben
des Wechselspannungssignals im Hörbereich über den Lautsprecherausgang (15) mittels des steuerbaren Rückhörpfades (13) auf eine hohe Dämpfung eingestellt wird.

20. Verfahren nach einem der Ansprüche 17 bis 19, **dadurch gekennzeichnet, dass** ein zwischen dem kommunikationsnetzseitigen Anschluss (18) und dem Lautsprecherausgang (15) angeordneter Empfangsverstärker (17) beim Ausgeben des Wechselspannungssignals im Hörbereich über den Lautsprecherausgang (15) mittels des steuerbaren Rückhörpfades (13) auf eine hohe Dämpfung eingestellt wird.

21. Verfahren nach einem der Ansprüche 17 bis 20, **dadurch gekennzeichnet, dass** als Steuerungseinrichtung (40) ein Mikrocontroller verwendet wird.

22. Verfahren nach einem der Ansprüche 17 bis 21, **dadurch gekennzeichnet, dass** als elektronische Schaltungseinrichtung (10) ein Audio-Codec-Baustein verwendet wird.

23. Verfahren nach einem der Ansprüche 18 bis 22, **dadurch gekennzeichnet, dass** die Frequenz des Wechselspannungssignals im Hörbereich von der Steuerungseinrichtung (40) eingestellt wird.

24. Verfahren nach einem der Ansprüche 18 bis 23, **dadurch gekennzeichnet, dass** der Pegel des Wechselspannungssignals im Hörbereich von der Steuerungseinrichtung (40) eingestellt wird.

## Claims

1. A circuit arrangement for generating an audible tone in a loudspeaker (20) of a communication terminal having
- an electronic circuit device (10) which has
- a microphone input (11),
- a loudspeaker output (15) with a power amplifier (14) connected upstream,
- a connection (18) on the communication network side, and
- a controllable side tone path (13) between the microphone input (11) and the loudspeaker output (15),
- and also **characterised by** a generator (30) for applying a supply voltage or an alternating-voltage signal in the audible range to the microphone input (11).

2. A circuit arrangement according to claim 1, **characterised in that** the electronic circuit device (10) is designed for the output of the alternating-voltage signal in the audible range by way of the connection (18) on the communication network side.

3. A circuit arrangement according to claim 1 or 2, **characterised in that** it has a control device (40) for the control of the generator (30) and also of the electronic circuit device (10).

4. A circuit arrangement according to claim 3, **characterised in that** the control device (40) and the electronic circuit device (10) are designed for the activation of the side tone path (13) by means of the control device (40).

5. A circuit arrangement according to one of the preceding claims, **characterised in that** between the microphone input (11) and the connection (18) on the communication network side the electronic circuit device (10) has a transmitter amplifier (16) which is designed for the setting of a high level of damping in the event of activation of the side tone path (13) for the alternating-voltage signal in the audible range.

6. A circuit arrangement according to one of claims 2 to 5, **characterised in that** between the connection (18) on the communication network side and the loudspeaker output (15) the electronic circuit device (10) has a receiver amplifier (17) which is designed for the setting of a high level of damping in the event of activation of the side tone path (13) for the alternating-voltage signal in the audible range.

7. A circuit arrangement according to one of claims 2 to 6, **characterised in that** the control device (40) is a microcontroller.

8. A circuit arrangement according to one of the preceding claims, **characterised in that** arranged between the generator (30) and the microphone input (11) there is a low-pass filter (50; Rt,Ct).

9. A circuit arrangement according to one of the preceding claims, **characterised in that** the electronic circuit device (10) is an audio codec module.

10. A circuit arrangement according to one of the preceding claims, **characterised in that** a microphone (60) in the form of an electret microphone is connected to the microphone input (11).

11. A circuit arrangement according to one of the preceding claims, **characterised in that** the generator (30) is designed for the generation of an alternating-voltage signal in the form of a rectangular signal.

12. A circuit arrangement according to claim 11, **characterised in that** the generator (30) is a Schmitt trigger.

13. A circuit arrangement according to one of claims 3 to 11, **characterised in that** the generator (30) is part of the control device (40).

14. A circuit arrangement according to one of the preceding claims, **characterised in that** it has means to set the frequency of the alternating-voltage signal in the audible range by the control device (40).

15. A circuit arrangement according to one of the preceding claims, **characterised in that** it has means to set the level of the alternating-voltage signal in the audible range by the control device (40).

16. A communication terminal, **characterised in that** it has a circuit arrangement according to one of the preceding claims.

17. Method for generating an audible tone in a loudspeaker (20) of a communication terminal with
- an electronic circuit device (10) which has
- a microphone input (11),
- a loudspeaker output (15) with a power amplifier (14) connected upstream,
- a connection (18) on the communication network side, and
- a controllable side tone path (13) between the microphone input (11) and the loudspeaker output (15),
**characterised by** the steps:
- generation of the alternating-voltage signal in the audible range by means of a generator (30),
- application of the alternating-voltage signal that is generated in the audible range to a microphone input (11) of the electronic circuit device (10), and
- output of the alternating-voltage signal in the audible range by way of the connection (18) of the electronic circuit device (10) on the communication network side, and/or
- output of the alternating-voltage signal in the audible range by way of the loudspeaker output (15) with an upstream power amplifier (14) of the electronic circuit device (10) by means of the controllable side tone path (13) of the electronic circuit device (10) connecting the microphone input (11) and the loudspeaker output (15).

18. Method according to claim 17, **characterised in that** the generator (30) and the electronic circuit device (10) are controlled by a control device (40).

19. Method according to claim 17 or 18, **characterised in that** a transmitter amplifier (16) arranged between the microphone input (11) and the connection (18) of the electronic circuit device (10) on the communication network side is set to a high level of damping when the alternating-voltage signal in the audible range is output by way of the loudspeaker output (15) by means of the controllable side tone path (13).

20. Method according to one of claims 17 to 19, **characterised in that** a receiver amplifier (17) arranged between the connection (18) on the communication network side and the loudspeaker output (15) is set to a high level of damping when the alternating-voltage signal in the audible range is output by way of the loudspeaker output (15) by means of the controllable side tone path (13).

21. Method according to one of claims 17 to 20, **characterised in that** a microcontroller is used as the control device (40).

22. Method according to one of claims 17 to 21, **characterised in that** an audio codec module is used as the electronic circuit device (10).

23. Method according to one of claims 18 to 22, **characterised in that** the frequency of the alternating-voltage signal in the audible range is set by the control device (40).

24. Method according to one of claims 18 to 23, **characterised in that** the level of the alternating-voltage signal in the audible range is set by the control device (40).

## Revendications

1. Montage de production d'un son audible dans un haut-parleur (20) d'un terminal de communication, comprenant
- un circuit (10) électronique qui comporte
- une entrée (11) de microphone,
- une sortie (15) de haut-parleur ayant un amplificateur (14) de puissance en amont,
- une borne (18) du côté du réseau de communication et
- un trajet (13) d'audition en retour, qui peut être commandé et qui est disposé entre l'entrée (11) du microphone et la sortie (15) du haut-parleur,
- ainsi que **caractérisé par** un générateur (30) d'alimentation de l'entrée (11) du microphone en une tension d'alimentation ou en un signal de tension alternative dans le domaine audible.

2. Montage suivant la revendication 1, **caractérisé en ce que** le circuit (10) électronique est constitué pour l'émission du signal de tension alternative dans le domaine audible par la borne (18) du côté du réseau de communication.

3. Circuit suivant la revendication 1 ou 2, **caractérisé en ce qu'**il comporte un dispositif (40) de commande pour commander le générateur (30) ainsi que le circuit (10) électronique.

4. Montage suivant la revendication 3, **caractérisé en ce que** le dispositif (40) de commande et le circuit (10) électronique sont constitués pour l'activation du trajet (13) d'audition en retour par le dispositif de commande.

5. Montage suivant l'une des revendications précédentes, **caractérisé en ce que** le circuit (10) électronique comporte, entre l'entrée (11) du microphone et la borne (18) du côté du réseau de communication, un amplificateur (16) d'émission, qui est constitué pour établir une grande atténuation du signal de tension alternative dans le domaine audible lors d'une activation du trajet (13) d'audition en retour.

6. Montage suivant l'une des revendications 2 à 5, **caractérisé en ce que** le circuit (10) électronique comporte, entre la borne (18) du côté du réseau de communication et la sortie (15) du haut-parleur, un amplificateur (17) de réception, qui est constitué pour établir une grande atténuation du signal de tension alternative dans le domaine audible lors d'une activation du trajet (13) d'audition en retour.

7. Montage suivant l'une des revendications 2 à 6, **caractérisé en ce que** le dispositif (40) de commande est un micro-contrôleur.

8. Montage suivant l'une des revendications précédentes, **caractérisé en ce qu'**un filtre passe bas (50;Rt,Ct) est monté entre le générateur (30) et l'entrée (11) du microphone.

9. Montage suivant l'une des revendications précédentes, **caractérisé en ce que** le circuit (10) électronique est un module audio Codec.

10. Montage suivant l'une des revendications précédentes, **caractérisé en ce qu'**un microphone (60) sous la forme d'un microphone à électret est relié à l'entrée (11) du microphone.

11. Montage suivant l'une des revendications précédentes, **caractérisé en ce que** le générateur (30) est constitué pour la production d'un signal de tension alternative sous la forme d'un signal rectangulaire.

12. Montage suivant la revendication 11, **caractérisé en ce que** le générateur (30) est une bascule de Schmidt.

13. Montage suivant l'une des revendications 3 à 11, **caractérisé en ce que** le générateur (30) fait parti du dispositif (40) de commande.

14. Montage suivant l'une des revendications précédentes, **caractérisé en ce qu'**il comporte des moyens de réglage de la fréquence du signal de tension alternative dans le domaine audible par le dispositif (40) de commande.

15. Montage suivant l'une des revendications précédentes, **caractérisé en ce qu'**il comporte des moyens de réglage du niveau du signal de la tension alternative dans le domaine audible par le dispositif (40) de commande.

16. Terminal de communication **caractérisé en ce qu'**il comporte un montage suivant l'une des revendications précédentes.

17. Procédé de production d'un son audible dans un haut-parleur (20) d'un terminal de communication, comprenant
- un circuit (10) électronique, qui comporte
- une entrée (11) de microphone,
- une sortie (15) de haut-parleur ayant un amplificateur (14) de puissance en amont,
- une borne (18) du côté du réseau de communication et
- un trajet (13) d'audition en retour, qui peut être commandé et qui est disposé entre l'entrée (11) du microphone et la sortie (15) du haut-parleur, **caractérisé par** les stades :
- on produit le signal de tension alternative dans le domaine audible par un générateur (30),
- on alimente une entrée (11) de microphone du circuit (10) électronique par le signal de tension alternative produit dans le domaine audible et
- on émet le signal de tension alternative dans le domaine audible par la borne (18) du côté du réseau de communication du circuit (10) électronique et/ou
- on émet le signal de tension alternative dans le domaine audible par la sortie (15) du haut-parleur avec en amont un amplificateur (14) de puissance du circuit (10) électronique au moyen du trajet (13) d'audition en retour du circuit (10) électronique, trajet qui peut être commandé et qui relie l'entrée (11) du microphone et la sortie (15) du haut-parleur.

18. Procédé suivant la revendication 17, **caractérisé en ce que** l'on commande le générateur (30) et le circuit (10) électronique par un dispositif (40) de commande.

19. Procédé suivant la revendication 17 ou 18, **caractérisé en ce qu'**on règle à une grande atténuation, par la sortie (15) du haut-parleur au moyen du trajet (13) d'audition en retour qui peut être commandé, un amplificateur (16) d'émission monté entre l'entrée (11) du microphone et la borne (18), du côté du réseau de communication, du circuit (10) électronique lors de l'émission du signal de tension alternative dans le domaine audible.

20. Procédé suivant l'une des revendications 17 à 19, **caractérisé en ce que** l'on règle à une grande atténuation, par la sortie (15) du haut-parleur au moyen du trajet (13) d'audition en retour qui peut être commandé, un amplificateur (17) de réception monté entre la borne (18) du côté du réseau de communication et la sortie (15) du haut-parleur lors de l'émission du signal de tension alternative dans le domaine audible.

21. Procédé suivant l'une des revendications 17 à 20, **caractérisé en ce que** l'on utilise un microcontrôleur comme dispositif (40) de commande.

22. Procédé suivant l'une des revendications 17 à 21, **caractérisé en ce que** l'on utilise un modèle audio Codec comme circuit (10) électronique.

23. Procédé suivant l'une des revendications 18 à 22, **caractérisé en ce que** l'on règle la fréquence du signal de tension alternative dans le domaine audible par le dispositif (40) de commande.

24. Procédé suivant l'une des revendications 18 à 23, **caractérisé en ce que** l'on règle le niveau du signal de tension alternative dans le domaine visible par le dispositif (40) de commande.
